# EUROPEAN PATENT APPLICATION

(11) **EP 2 403 225 A1**
(43) Date of publication of application: **04.01.2012**
(21) Application number: 10168002.3
(22) Date of filing: 30.06.2010
(51) Int. Cl.: H04M 1/725, H04M 19/04

(54) **Methods and apparatus for visually supplementing a graphical user interface**

(71) Applicant: RESEARCH IN MOTION LIMITED, Waterloo, Ontario N2L 3W8 (CA)
(72) Inventor: Ladouceur, Norman, Waterloo Ontario N2L 3W8 (CA); Griffin, Jason, Tyler, Waterloo Ontario N2L 3W8 (CA)
(74) Representative: MERH-IP Matias Erny Reichl Hoffmann

(57) **Abstract**

Methods and apparatus for visually supplementing a graphical user interface are described. An example method includes detecting an opportunity to provide an alert (to a user) on the display of a mobile device (100) and in response to the detection, providing supplemental information on a display (110) of the mobile device (100) for less than 75 milliseconds.

## Description

### BACKGROUND

Users of mobile devices wish to multitask and operate multiple applications or communications simultaneously. However, mobile devices have relatively limited screen space for displaying messages and alerts. Therefore, messages and alerts typically interrupt the user and use large portions of the screen for displaying the messages and alerts. Alternatively, messages and alerts are displayed on the edge of the screen, but such messages and alerts may be very small and difficult for users to read due to the size of the screen on mobile devices. Additionally, messages and alerts typically remain on the screen for extended periods of time or until the user dismisses them to ensure that the user has had sufficient time to perceive and comprehend the message. These messages and alerts are typically modal in that they prevent other operation of the mobile device (e.g., selection of other graphical user interface elements) while the messages and alerts are displayed on the screen.

### BRIEF DESCRIPTION OF THE DRAWINGS

For a better understanding of the various embodiments described herein and to show more clearly how they may be carried into effect, reference will now be made, by way of example only, to the accompanying drawings which show at least one example embodiment and in which:
FIG. 1 is a block diagram of an example embodiment of a mobile device;
FIG. 2 is a block diagram of an example embodiment of a communication subsystem component of the mobile device of FIG. 1;
FIG. 3 is an example block diagram of a node of a wireless network;
FIG. 4 is a block diagram illustrating components of a host system in one example configuration for use with the wireless network of FIG. 3 and the mobile device of FIG. 1;
FIG. 5 is a flowchart illustrating an example process to implement the visual supplement module of FIG. 1;
FIG. 6 is an illustration of an example display presenting a priming information message over the display of a webpage on a mobile device;
FIG. 7 is an illustration of an example display presenting a supplemental information message over the display of a webpage on a mobile device;
FIG. 8 is an illustration of an example display presenting a supplemental information message over the display of a game;
FIG. 9 is an illustration of an example display presenting a supplemental information message over the display of a calendar;
FIG. 10 is an illustration of an example display presenting a supplemental information message over the display of a navigation application;
FIG. 11 is an illustration of an example display presenting a supplemental information message over the display of graphic user interface form;
FIG. 12 is an illustration of an example display presenting a supplemental information message over the display of a graphical user interface of icons for applications;
FIG. 13 is an illustration of an example display presenting a supplemental information message over a game application;
FIG. 14 is an illustration of an example display presenting a supplemental information message over the display of a music playing application;
FIG. 15 is an illustration of an example display presenting a supplemental information message over the display of a text communication that is being drafted on a mobile device;
FIG. 16 is an illustration of an example mobile device including a display presenting a supplemental information message over the display of a webpage;and
FIG. 17 is a block diagram of an example implementation of the visual supplement module that may implement the process illustrated in FIG. 5.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a mobile wireless communication device, hereafter referred to as a mobile device, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

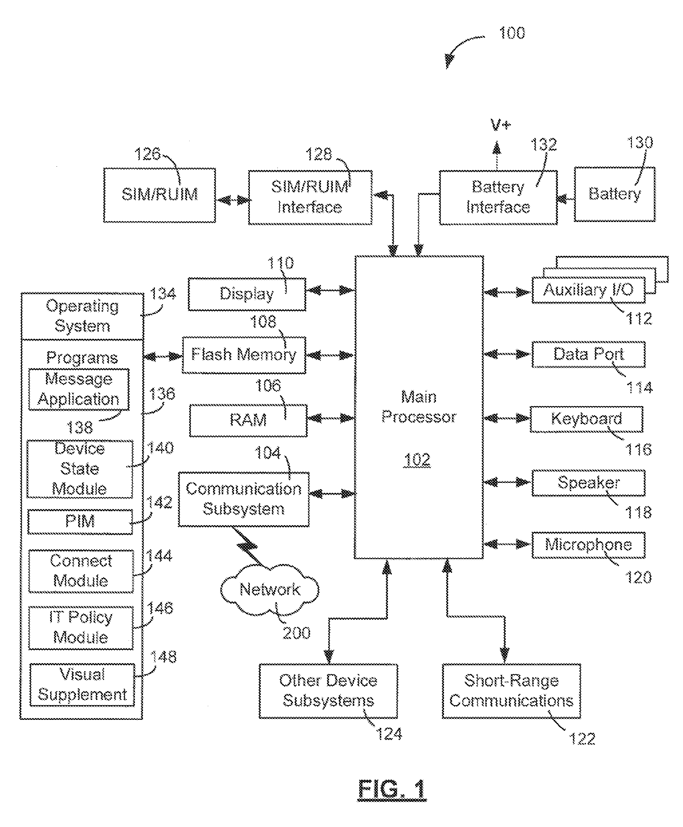

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIGS. 1 through 4.

Referring first to FIG. 1, shown therein is a block diagram of an example embodiment of a mobile device 100. The mobile device 100 includes a number of components such as a main processor 102 that controls the overall operation of the mobile device 100. Communication functions, including data and voice communications, are performed through a communication subsystem 104. The communication subsystem 104 receives messages from and sends messages to a wireless network 200. In this example embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one example implementation, other wireless networks may also be associated with the mobile device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 148 which are described in more detail below. The operating system 134 and the software components 136 to 148 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 148, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

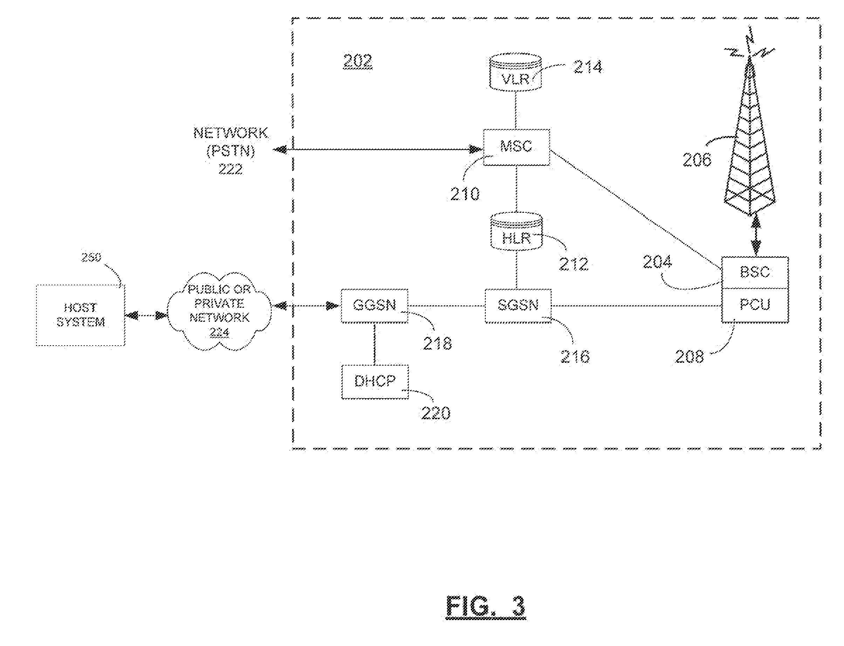

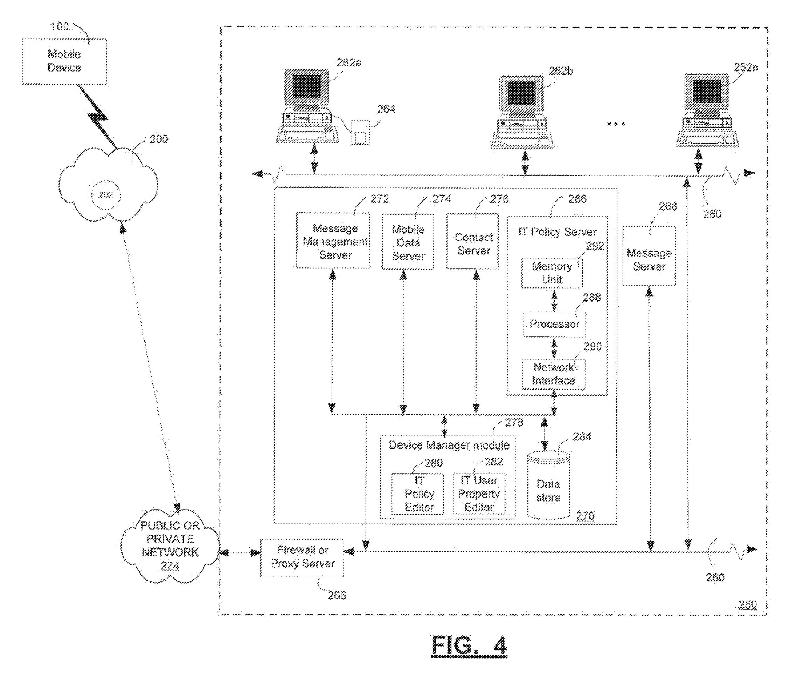

The mobile device 100 also includes a connect module 144, and an IT policy module 146. The connect module 144 implements the communication protocols that are required for the mobile device 100 to communicate with the wireless infrastructure and any host system, such as an enterprise system, that the mobile device 100 is authorized to interface with. Examples of a wireless infrastructure and an enterprise system are given in FIGS. 3 and 4, which are described in more detail below.

The connect module 144 includes a set of APls that can be integrated with the mobile device 100 to allow the mobile device 100 to use any number of services associated with the enterprise system. The connect module 144 allows the mobile device 100 to establish an end-to-end secure, authenticated communication pipe with the host system. A subset of applications for which access is provided by the connect module 144 can be used to pass IT policy commands from the host system to the mobile device 100. This can be done in a wireless or wired manner. These instructions can then be passed to the IT policy module 146 to modify the configuration of the device 100. Alternatively, in some cases, the IT policy update can also be done over a wired connection.

The IT policy module 146 receives IT policy data that encodes the IT policy. The IT policy module 146 then ensures that the IT policy data is authenticated by the mobile device 100. The IT policy data can then be stored in the flash memory 106 in its native form. After the IT policy data is stored, a global notification can be sent by the IT policy module 146 to all of the applications residing on the mobile device 100. Applications for which the IT policy may be applicable then respond by reading the IT policy data to look for IT policy rules that are applicable.

The IT policy module 146 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module 146 can determine which applications are affected by the IT policy data and send a notification to only those applications. In either of these cases, for applications that aren't running at the time of the notification, the applications can call the parser or the IT policy module 146 when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 146 sends an acknowledgement back to the host system to indicate that the IT policy data was received and successfully applied.

The mobile device 100 also includes a visual supplement module 148 to provide visual alerts and messages on the mobile device 100 (e.g., on the display 110, using LEDs or other visual indicators, using audio indications, etc.). The visual alerts and messages provide information to the user of the mobile device 100 with limited interruption of the user's operation of the mobile device 100. For example, the visual alerts and messages may alert the user of the receipt of communications on the mobile device 100, may provide assistance to the user in operation of the mobile device 100, may provide supplemental information for applications, may request the attention of the user, may guide the view of the user to a particular part of a display screen (e.g., to receive a second alert), etc. As described in further detail herein, to provide visual alerts and messages to users with limited interruption of their operation of the mobile device 100 the visual supplement module 148 displays messages quickly enough (e.g., showing the message for less than 100ms) to provide no conscious perception or limited perception (e.g., subliminal messages). Due to the variations in the absolute threshold of human visual perception , visual stimuli that are not consciously perceived by one person may be consciously perceived by another. Accordingly, the duration of visual presentation for messages and alerts may be varied. For example, a user, device, manufacture, or other setting may be provided for configuring the duration for the presentation of messages to ensure that the messages are minimally consciously perceived or not consciously perceived. Alternatively, a learning process may adaptively determine a duration for the messages by, for example, analyzing user interaction and response to the presentation of messages and alerts.

Visual alerts and messages may be masked by including a section of text on the screen (e.g., a string of X's or random letters) that can be changed to a message (e.g., the name of the sender of a communication) during the time that an alert or message is to be displayed. Alternatively, a symbol (e.g., a silhouette of a person) could be displayed on the screen at all times and the symbol could be replaced with an image representative of the alert or message (e.g., a picture of a person that sent a communication). The masking information could remain on the screen prior to or after the message or alert, could be displayed only during the message or alert, or could be displayed shortly before the message or alert (e.g., could be displayed for less than 100ms prior displaying the message or alert).

To determine when to provide visual alerts and messages, the visual supplement module 148 may communicate with one or more of the display 110, other ones of the programs 136 including the message application 138 and the device state module 140, the communication subsystem, the keyboard 116, the microphone 120, etc. The visual supplement module 148 may be implemented by software as illustrated in FIG. 1 or may be implemented by any combination of hardware, firmware, and/or software, including, for example, implementation exclusively by hardware.

Other types of software applications can also be installed on the mobile device 100. These software applications can be third party applications, which are added after the manufacture of the mobile device 100. Examples of third party applications include games, calculators, utilities, etc.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, an optical navigation control, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

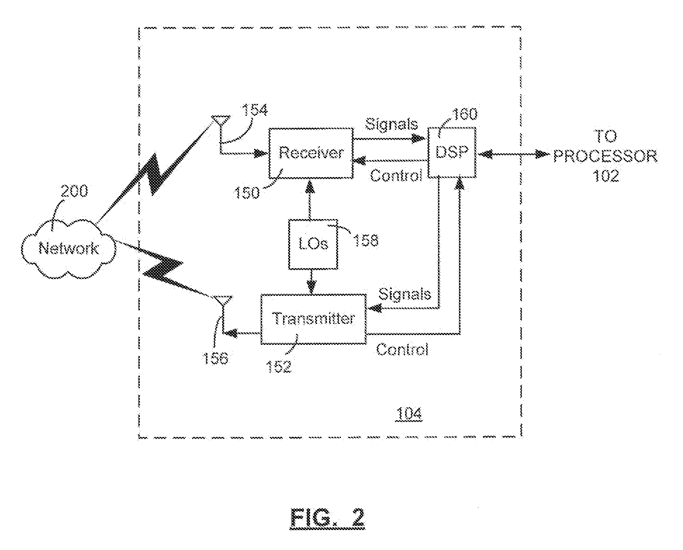

Referring now to FIG. 2, an example block diagram of the communication subsystem component 104 that operates in conjunction with the processor 102 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in FIG. 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile device 100 and the wireless network 200 can contain one or more different channels, typically different RF channels, and associated protocols used between the mobile device 100 and the wireless network 200. An RF channel is a limited resource that must be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to FIG. 3, a block diagram of an example implementation of a node 202 of the wireless network 200 is shown. In practice, the wireless network 200 comprises one or more nodes 202. In conjunction with the connect module 144, the mobile device 100 can communicate with the node 202 within the wireless network 200. In the example implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a host system 250 via a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the mobile device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile device 100 in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile device 100 is not using its PDP Context, the PDP Context can be de-allocated and the IP address returned to the IP address pool managed by the DHCP server 220.

Referring now to FIG. 4, shown therein is a block diagram illustrating components of an example configuration of a host system 250 that the mobile device 100 can communicate with in conjunction with the connect module 144. The host system 250 will typically be a corporate enterprise or other local area network (LAN), but may also be a home office computer or some other private system, for example, in variant implementations. In this example shown in FIG. 4, the host system 250 is depicted as a LAN of an organization to which a user of the mobile device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's mobile device 100 is situated on a LAN connection. The cradle 264 for the mobile device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the mobile device 100, and may be particularly useful for bulk information updates often performed in initializing the mobile device 100 for use. The information downloaded to the mobile device 100 may include certificates used in the exchange of messages.

The user computers 262a-262n will typically also be connected to other peripheral devices, such as printers, etc. which are not explicitly shown in FIG. 4. Furthermore, only a subset of network components of the host system 250 are shown in FIG. 4 for ease of exposition, and the host system 250 will comprise additional components that are not explicitly shown in FIG. 4 for this example configuration. More generally, the host system 250 may represent a smaller part of a larger network (not shown) of the organization, and may comprise different components and/or be arranged in different topologies than that shown in the example embodiment of FIG. 4.

To facilitate the operation of the mobile device 100 and the wireless communication of messages and message-related data between the mobile device 100 and components of the host system 250, a number of wireless communication support components 270 can be provided. In some implementations, the wireless communication support components 270 can include a message management server 272, a mobile data server 274, a contact server 276, and a device manager module 278. The device manager module 278 includes an IT Policy editor 280 and an IT user property editor 282, as well as other software components for allowing an IT administrator to configure the mobile devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the mobile devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this example embodiment, the mobile device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the mobile device 100. The wireless VPN router allows a VPN connection to be established directly through a specific wireless network to the mobile device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device 100 are initially received by a message server 268 of the host system 250. Such messages may originate from any number of sources. For instance, a message may have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some example implementations of the message server 268 include a Microsoft Exchange^{™} server, a Lotus Domino^{™} server, a Novell Groupwise^{™} server, or another suitable mail server installed in a corporate environment. In some implementations, the host system 250 may comprise multiple message servers 268. The message server 268 may also be adapted to provide additional functions beyond message management, including the management of data associated with calendars and task lists, for example.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the mobile device 100. Alternatively, the data store associated with the message server 268 can store all of the messages for the user of the mobile device 100 and only a smaller number of messages can be stored on the mobile device 100 to conserve memory. For instance, the most recent messages (i.e. those received in the past two to three months for example) can be stored on the mobile device 100.

When operating the mobile device 100, the user may wish to have e-mail messages retrieved for delivery to the mobile device 100. The message application 138 operating on the mobile device 100 may also request messages associated with the user's account from the message server 268. The message application 138 may be configured (either by the user or by an administrator, possibly in accordance with an organization's information technology (IT) policy) to make this request at the direction of the user, at some pre-defined time interval, or upon the occurrence of some pre-defined event. In some implementations, the mobile device 100 is assigned its own e-mail address, and messages addressed specifically to the mobile device 100 are automatically redirected to the mobile device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the mobile device 100. The message management server 272 also facilitates the handling of messages composed on the mobile device 100, which are sent to the message server 268 for subsequent delivery.

For example, the message management server 272 may monitor the user's "mailbox" (e.g. the message store associated with the user's account on the message server 268) for new e-mail messages, and apply user-definable filters to new messages to determine if and how the messages are relayed to the user's mobile device 100. The message management server 272 may also compress and encrypt new messages (e.g. using an encryption technique such as Data Encryption Standard (DES), Triple DES, or Advanced Encryption Standard (AES)) and push them to the mobile device 100 via the shared network infrastructure 224 and the wireless network 200. The message management server 272 may also receive messages composed on the mobile device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the mobile device 100 can be defined (e.g. by an administrator in accordance with IT policy) and enforced by the message management server 272. These may include whether the mobile device 100 may receive encrypted and/or signed messages, minimum encryption key sizes, whether outgoing messages must be encrypted and/or signed, and whether copies of all secure messages sent from the mobile device 100 are to be sent to a pre-defined copy address, for example.

The message management server 272 may also be adapted to provide other control functions, such as only pushing certain message information or pre-defined portions (e.g. "blocks") of a message stored on the message server 268 to the mobile device 100. For example, in some cases, when a message is initially retrieved by the mobile device 100 from the message server 268, the message management server 272 may push only the first part of a message to the mobile device 100, with the part being of a pre-defined size (e.g. 2 KB). The user can then request that more of the message be delivered in similar-sized blocks by the message management server 272 to the mobile device 100, possibly up to a maximum pre-defined message size. Accordingly, the message management server 272 facilitates better control over the type of data and the amount of data that is communicated to the mobile device 100, and can help to minimize potential waste of bandwidth or other resources.

The mobile data server 274 encompasses any other server that stores information that is relevant to the corporation. The mobile data server 274 may include, but is not limited to, databases, online data document repositories, customer relationship management (CRM) systems, or enterprise resource planning (ERP) applications.

The contact server 276 can provide information for a list of contacts for the user in a similar fashion as the address book on the mobile device 100. Accordingly, for a given contact, the contact server 276 can include the name, phone number, work address and e-mail address of the contact, among other information. The contact server 276 can also provide a global address list that contains the contact information for all of the contacts associated with the host system 250.

The message management server 272, the mobile data server 274, the contact server 276, the device manager module 278, the data store 284 and the IT policy server 286 do not need to be implemented on separate physical servers within the host system 250. For example, some or all of the functions associated with the message management server 272 may be integrated with the message server 268, or some other server in the host system 250. Alternatively, the host system 250 may comprise multiple message management servers 272, particularly in variant implementations where a large number of mobile devices need to be supported.

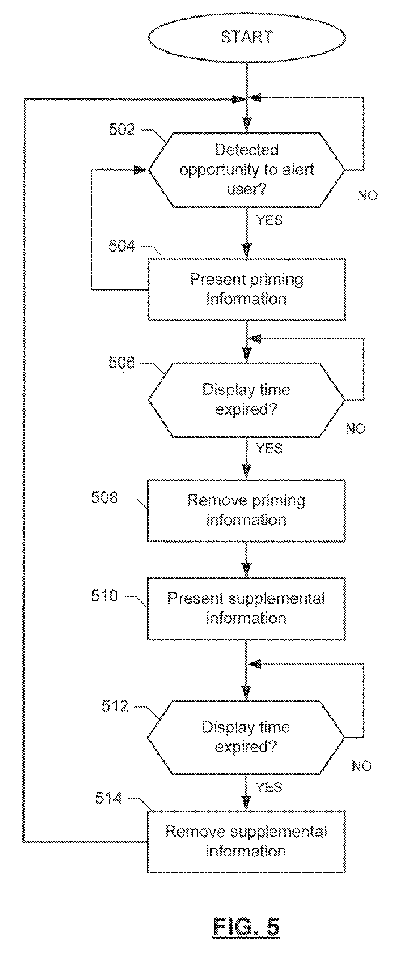

Alternatively, in some embodiments, the IT policy server 286 can provide the IT policy editor 280, the IT user property editor 282 and the data store 284. In some cases, the IT policy server 286 can also provide the device manager module 278. The processor 288 of the IT policy server 286 can be used to perform the various steps of a method for providing IT policy data that is customizable on a per-user basis as explained further below and in conjunction with FIGS. 5 to 8. The processor 288 can execute the editors 280 and 282. In some cases, the functionality of the editors 280 and 282 can be provided by a single editor. In some cases, the memory unit 292 can provide the data store 284.

The device manager module 278 provides an IT administrator with a graphical user interface with which the IT administrator interacts to configure various settings for the mobile devices 100. As mentioned, the IT administrator can use IT policy rules to define behaviors of certain applications on the mobile device 100 that are permitted such as phone, web browser or Instant Messenger use. The IT policy rules can also be used to set specific values for configuration settings that an organization requires on the mobile devices 100 such as auto signature text, WLAN/VoIP/VPN configuration, security requirements (e.g. encryption algorithms, password rules, etc.), specifying themes or applications that are allowed to run on the mobile device 100, and the like.

FIG. 5 depicts an example flow diagram representative of processes that may be implemented using, for example, computer readable instructions that may be used to present supplemental messages and alerts. The example process of FIG. 5 may be performed using a processor, a controller and/or any other suitable processing device. For example, the example process of FIG. 5 may be implemented using coded instructions (e.g., computer readable instructions) stored on a tangible computer readable medium such as a flash memory, a read-only memory (ROM), and/or a random-access memory (RAM). As used herein, the term tangible computer readable medium is expressly defined to include any type of computer readable storage and to exclude propagating signals. Additionally or alternatively, the example process of FIG. 5 may be implemented using coded instructions (e.g., computer readable instructions) stored on a non-transitory computer readable medium such as a flash memory, a read-only memory (ROM), a random-access memory (RAM), a cache, or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium and to exclude propagating signals.

Alternatively, some or all of the example process of FIG. 5 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, some or all of the example process of FIG. 5 may be implemented manually or as any combination(s) of any of the foregoing techniques, for example, any combination of firmware, software, discrete logic and/or hardware. Further, although the example process of FIG. 5 is described with reference to the flow diagram of FIG. 5, other methods of implementing the processes of FIG. 5 may be employed. For example, the order of execution of the blocks may be changed, and/or some of the blocks described may be changed, eliminated, sub-divided, or combined. Additionally, any or all of the example process of FIG. 5 may be performed sequentially and/or in parallel by, for example, separate processing threads, processors, devices, discrete logic, circuits, etc.

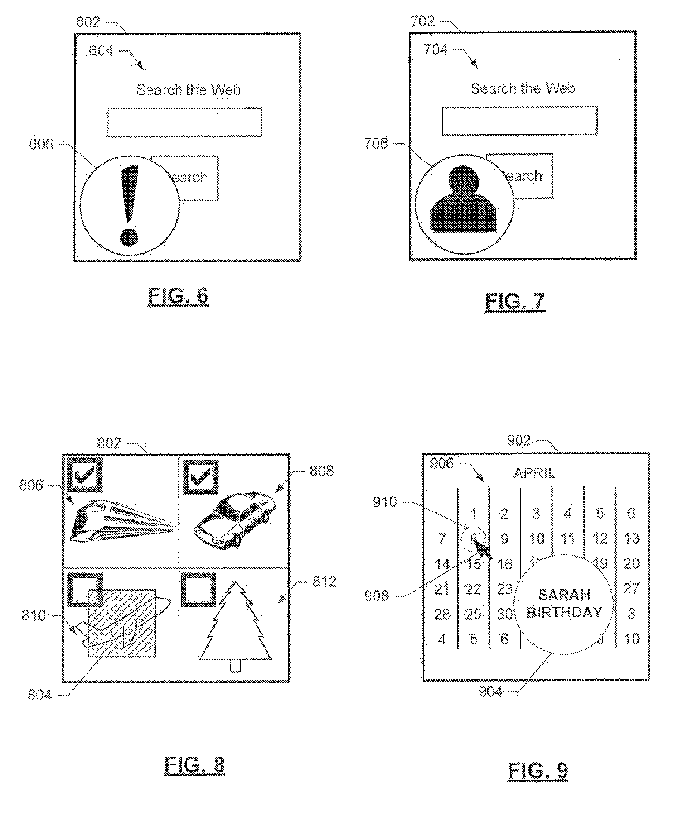

FIG. 5 is a flowchart illustrating an example process to implement the visual supplement module 148 of FIG. 1. The example flowchart begins when the visual supplement module 148 detects an opportunity to provide an alert (to a user) on the display of a mobile device (e.g., the mobile device 100). Example opportunities to provide such an alert are described in further detail in conjunction with FIGS. 6-14. However, any time when a visual alert or message may used to provide information to a user may be an opportunity to provide an alert, which may be an additional alert (to a user), on the display of a mobile device. For example, detecting an opportunity to provide an alert (to a user) on the display of a mobile device may involve monitoring incoming and outgoing communications at the mobile device 100, monitoring a graphical user interface on the display 110 of the mobile device 100, monitoring user input and operation of the mobile device 100, etc. The visual supplement module 148 may operate in conjunction with other alerts at the mobile device 100 to detect an opportunity. For example, some alerts at the mobile device may be presented by the operating system 134 using alerts or messages that are designed for maximum perception (e.g., messages that interrupt the user's operation of the mobile device 100) by users of the mobile device 100 while other alerts are presented by the visual supplement module 148 to have limited or no conscious perception by a user (e.g., subliminal messages). In an example implementation, low priority alerts may not be presented at the mobile device, medium priority alerts may be presented for limited or no conscious perception by the visual supplement module 148, and high priority alerts may be presented for maximum perception (e.g., full screen display). For example, an appointment reminder may have an escalating priority as the deadline or appointment time approaches. For example, the a reminder could be displayed sixty minutes prior to an appointment for a very short amount of time (e.g., 10 ms) and the reminder could be periodically displayed for longer and longer amounts of time until the actual appointment time where the reminder is displayed for an extended period.

According to the illustrated example, after an opportunity to provide an alert (to a user) on the display of a mobile device has been detected (block 502), the visual supplement module 148 presents priming information (block 504). The priming information of the example implementation is a visual message that alerts the user that a subsequent visual message will be presented. For example, when an indication of the person that originated an incoming communication (e.g., a call, an email, a short message service message, etc.) is to be presented, a symbol of the type of communication may first be presented (e.g., an envelope for an email, a telephone for a phone call, a company logo for an application from that company, etc.), a symbol indicative of the urgency of a message may first be presented, etc. While the priming information of the illustrated example is described as a visual indication on a display, any priming maybe used such as, for example, an audio alert (e.g., a beep, a verbal alert that visual supplemental information is about to be presented, etc.), a flashing light (e.g., an LED), etc.

After presenting the priming information (block 504), the visual supplement module 148 determines if the display time for the priming information has expired (block 506). According to the illustrated example, the display time is set to an amount of time that will have limited perception or no conscious perception by the user to avoid interrupting the user's operation of the device. For example, the display time may be 75 milliseconds or less. Accordingly, if the user is currently composing an email the user may become aware of the priming message, for example, subconsciously/subliminally, but operation of the mobile device will not be interrupted. Other techniques for reducing interruption caused by presenting the priming message may be used such as, for example, masking, transparency, color selection, etc. When the display time has expired, the visual supplement module 148 removes the priming information from display (block 508).

The visual supplement module 148 then presents the supplemental information that was forecast by the priming information (block 510). For example, the supplemental information may be a symbol representative of a person that initiated a communication that is being received by the mobile device 100, a hint for the user in operating the mobile device 100 or an application executing thereon, information to be conveyed from an application to the user of the mobile device 100, a symbol representative of an application or of a company that created the application. etc.

After presenting the supplemental information (block 510), the visual supplement module 148 determines if the display time for the supplemental information has expired (block 512). According to the illustrated example, the display time is set to an amount of time that will have limited perception or no conscious perception by the user to avoid interrupting the user's operation of the mobile device 100. For example, the display time may be 75 milliseconds or less. Accordingly, if the user is currently composing an email, the user may become aware of the supplemental message, for example, subconsciously/subliminally, but operation of the mobile device will not be interrupted. Other techniques for reducing interruption caused by presenting the supplemental information message may be used such as, for example, masking, transparency, color selection, etc. When the display time has expired, the visual supplement module 148 removes the supplemental information from display (block 514). Control then returns to block 502 to await the next opportunity to provide an alert (to a user) on the display of the mobile device.

While the example of FIG. 5 includes a priming information message and a supplemental information message, other implementations may not include a priming information message. Alternatively, criteria may be used to determine when a priming message should be used. For example, when the visual supplement module 148 determines that a user is not responding or taking a long time to respond (e.g., responding so slowly to a supplemental information message indicative of an incoming call that the call is transferred to voicemail before the user takes action), the visual supplement module 148 may determine that a priming information message should be used in the future. The priming information message may be provided for some alerts and not for others. Additionally, the time duration of the priming information message may be varied for possible alerts.

While the example of FIG. 5 includes a single instance of a priming information message and a single instance of a supplemental information message, one or both of the messages may be repeated. For example, the priming message may be displayed several times before displaying the supplemental information message, the supplemental information message may be displayed multiple times, and any combination of the messages may be used.

FIG. 6 is an illustration of an example display 602 presenting a priming information message 606 over the display of a webpage 604 on a mobile device (e.g., the mobile device 100 of FIG. 1). The priming information message 606 is an icon that alerts users that a supplemental information message is about to be displayed. In the illustrated example, the icon is a general alert that some type of priming information message is about to be displayed. Alternatively, the priming information message 606 could be a message that indicates a type of supplemental information message that is about to be displayed (e.g., an envelope to indicate that information about an email is about to be displayed, a telephone to indicate that information about a phone call is about to be displayed, a tape or tape recorder to indicate that information about a voicemail is about to be displayed, etc.). The webpage 604 of the illustrated example is representative of the possible operations that may be ongoing at the mobile device 100. For example, a user may be composing an email, a user may be on a phone call, a user may be listening to music, etc. The priming information message 606 of the illustrated example is presented quickly enough to avoid consciously interrupting the user (e.g., for less than 75 milliseconds).

FIG. 7 is an illustration of an example display 702 presenting a supplemental information message 706 over the display of a webpage 704 on a mobile device (e.g., the mobile device 100 of FIG. 1). The supplemental information message 706 of the illustrated example is a visual representation of a person that initiated an incoming communication (e.g., a telephone call, a voicemail, an email, a short message service message, etc.). For example, the visual representation may be a photograph, a cartoon or caricature representative of the person, text identifying the person's name, a business logo, a picture of the person's hobby, a visual representation of the person's location, etc. The webpage 704 of the illustrated example is representative of the possible operations that may be ongoing at the mobile device 100. For example, a user may be composing an email, a user may be on a phone call, a user may be listening to music, etc. The supplemental information message 706 of the illustrated example is presented quickly or otherwise masked to avoid consciously interrupting the user (e.g., for less than 75 milliseconds).

FIG. 8 is an illustration of an example display 802 presenting a supplemental information message 804 over the display of a game in which users are to select objects that belong together among the four objects 806-812. In the illustrated example, the train object 806, the car object 808, and the airplane object 810 are modes of transportation, while the tree object 812 is not related. The train object 806 and the car object 808 have been selected. According to the illustrated example, the user has hesitated in selecting the final object of the group (the airplane object 810) and, accordingly, the visual supplement module 148 has detected an opportunity to display an alert. If the example system uses a priming information message like the priming information message 606 of FIG. 6, the priming information message has already been displayed. The supplemental information message 804 is displayed as a shaded box to direct a user's attention to the airplane object 810. The supplemental information message 804 is displayed in a manner that avoids consciously alerting the user. For example, the message may be displayed for 75 milliseconds or less, may be displayed using colors that are only slightly different than the color of the airplane object 804, using any other technique that communicates the message with little or no conscious perception, etc.

FIG. 9 is an illustration of an example display 902 presenting a supplemental information message 904 over the display of a calendar 906. In the illustrated example, the supplemental information message 904 is displayed when a cursor 908 or other graphical user interface selection moves over a date 910 on which an event is scheduled. For example, a date on which a person's birthday is scheduled may cause the supplemental information message 904 to be displayed including an indication of the person's name and the event (birthday). Alternatively, any other indication, symbol, text, or message could be displayed. Additionally, the supplemental information message 904 may be preceded by a priming information message. The supplemental information message 904 is displayed in a manner that avoids consciously alerting the user. For example, the message may be displayed for 75 milliseconds or less, may be displayed using colors that are only slightly different than the color of the calendar 906, using any other technique that communicates the message with little or no conscious perception, etc.

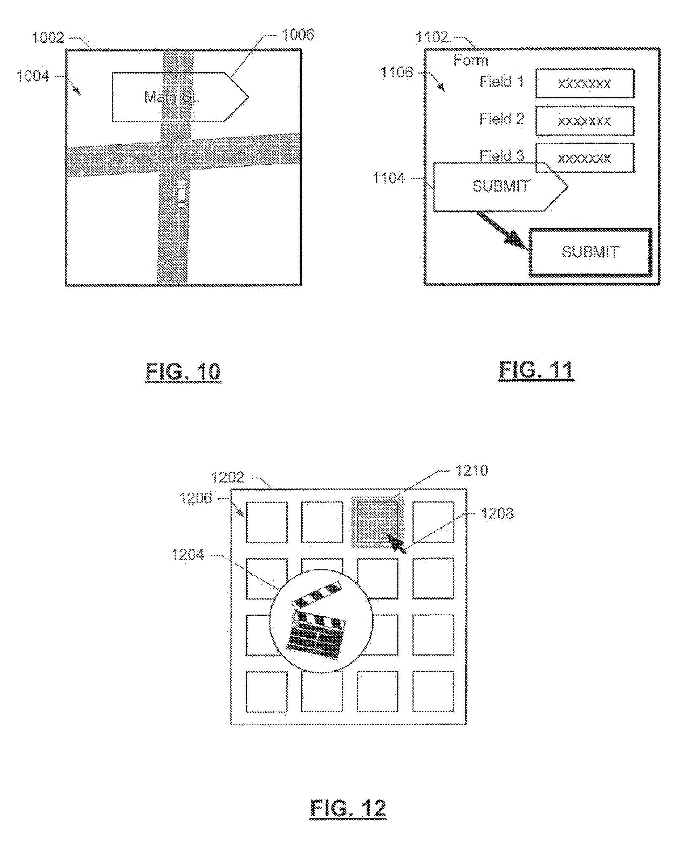

FIG. 10 is an illustration of an example display 1002 presenting a supplemental information message 1004 over the display of a navigation application 1006. In the illustrated example, the supplemental information message 1004 is an indication of the cross street that is approaching. Alternatively, the supplemental information message could include any other type of information such as, for example, information about upcoming points of interest, information about a speed of travel, information about an action that a driver should take, etc. Additionally, the supplemental information message 1004 may be preceded by a priming information message. The supplemental information message 1004 is displayed in a manner that avoids consciously alerting the user. For example, the message may be displayed for 75 milliseconds or less, may be displayed using colors that are only slightly different than the color of the navigation application 1006, using any other technique that communicates the message with little or no conscious perception, etc.

FIG. 11 is an illustration of an example display 1102 presenting a supplemental information message 1104 over the display of graphic user interface form 1106. In the illustrated example, the supplemental information message 1104 is presented based on the user input to aid the user in completing the form 1106. For example, when the user has completed the fields of the form 1106 and delays, the visual supplement module 148 determines that the user is having difficulty understanding how to proceed. Accordingly, the visual supplement module 148 presents the supplemental information message 1104 as a hint of how the user is to proceed. Additionally, the supplemental information message 1104 may be preceded by a priming information message. The supplemental information message 1104 is displayed in a manner that avoids consciously alerting the user. For example, the message may be displayed for 75 milliseconds or less, may be displayed using colors that are only slightly different than the color of the navigation application 1106, using any other technique that communicates the message with little or no conscious perception, etc.

FIG. 12 is an illustration of an example display 1202 presenting a supplemental information message 1204 over the display of a graphical user interface of icons for applications 1206. In the illustrated example, the supplemental information message 1204 is presented when a user moves a cursor or other graphical user interface selection 1208 over a particular application 1210. The example supplemental information message 1204 provides an indication or hint as to the content of the currently selected application 1210. Additionally, the supplemental information message 1204 may be preceded by a priming information message. The supplemental information message 1204 is displayed in a manner that avoids consciously alerting the user. For example, the message may be displayed for 75 milliseconds or less, may be displayed using colors that are only slightly different than the color of the graphical user interface menu 1206, using any other technique that communicates the message with little or no conscious perception, etc.

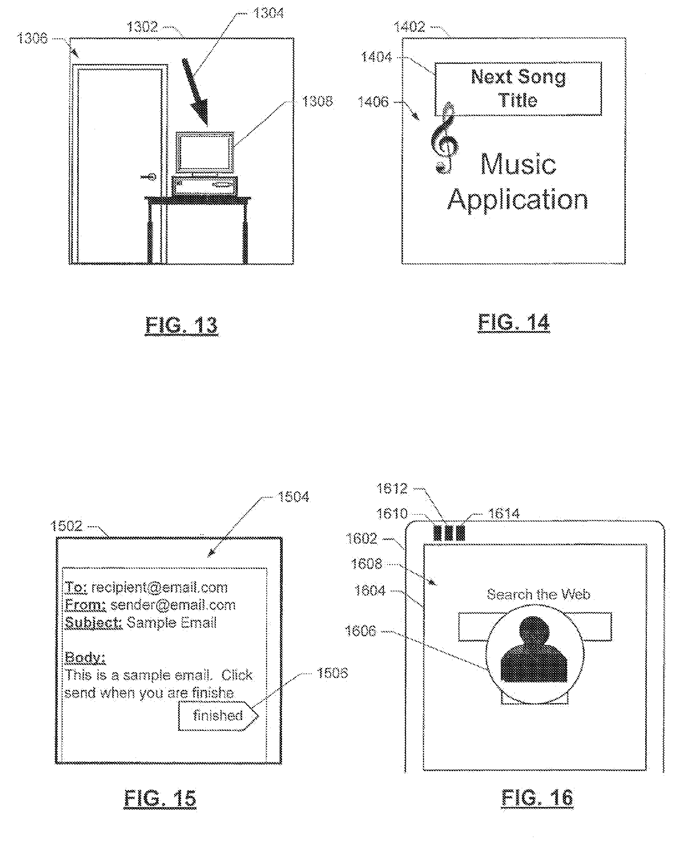

FIG. 13 is an illustration of an example display 1302 presenting a supplemental information message 1304 over a game application 1306. In the illustrated example, the supplemental information message 1304 is presented when a user has delayed making a move in the game application 1306. For example, in a roll playing game in which the user must manipulate objects to advance the game, after a user has been at the same stage of the game for a period of time, the supplemental information message 1304 may be presented as a hint for the user's next move. The example supplemental information message 1304 is an error that directs the user's attention to the next object to be manipulated 1308. Because the supplemental information message 1304 is presented for a period of time so short that the user does not consciously perceive the supplemental information message 1304 (e.g., less than or equal to 75 milliseconds), the user may become aware of the next move in the game without recognizing that a hint was provided. Additionally, the supplemental information message 1304 may be preceded by a priming information message.

FIG. 14 is an illustration of an example display 1402 presenting a supplemental information message 1404 over the display of a music playing application 1406. In the illustrated example, the supplemental information message 1404 is presented when a currently playing song is about to end. The example supplemental information message 1404 indicates the song title of the next song. Alternatively, any other information may be presented such as, for example, the title of the current song, the artist for the current or next song, an image representative of the current or next song, an image representative of the current or next artist, etc. Additionally, the supplemental information message 1404 may be preceded by a priming information message. The supplemental information message 1404 is displayed in a manner that avoids consciously alerting the user. For example, the message may be displayed for 75 milliseconds or less, may be displayed using colors that are only slightly different than the color of the music playing application 1206, using any other technique that communicates the message with little or no conscious perception, etc.

FIG. 15 is an illustration of an example display 1502 presenting a supplemental information message 1506 over the display of a text communication 1504 that is being drafted on a mobile device (e.g., the mobile device 100 of FIG. 1). The supplemental information message 1506 of the illustrated example provides a predicted text to complete the user's typing. In the illustrated example, the mobile device 100 has predicted that the user is typing the word "finished" and, therefore, the visual supplemental module 148 displays the word finished. The supplemental information message 1506 may be displayed immediately when the mobile device 100 determines a predicted word, may be displayed after the user pauses when typing a word, after it has been determined that the user has made a typo, when a word is replaced by the mobile device (e.g., the mobile device may replace "youre" with "you're"), etc. The text communication 1504 of the illustrated example is representative of the possible operations that may be ongoing at the mobile device 100. For example, a user may be composing an email, composing a text message, entering text in the field of a form, composing a new appointment, composing a word processing document, etc. The supplemental information message 1506 is displayed in a manner that avoids consciously alerting the user. For example, the message may be displayed for 75 milliseconds or less, may be displayed using colors that are only slightly different than the color of the text communication 1504, using any other technique that communicates the message with little or no conscious perception, etc. Alternatively, the user could be alerted of the next letter in the predicted word by highlighting the next letter on the keyboard or keypad. For example, on a touchscreen keyboard the next letter could be highlighted using a highlight that will have limited or no conscious perception. On a physical keyboard the next key could be backlit quickly (e.g., for less than 100 ms) or for longer periods of time.

FIG. 16 is an illustration of an example mobile device 1602 (e.g., the mobile device 100 of FIG. 1) including a display 1604 presenting a supplemental information message 1606 over the display of a webpage 1608. The supplemental information message 1606 may be providing any type of information to a user such as, for example, indicating the sender of an incoming communication, indicating a reminder for an appointment or calendar item, indicating a hint for using a user interface or playing a game, etc. The supplemental information message 1606 may be displayed in a manner that provides limited or no conscious perception by a user of the phone (e.g., the supplemental information message 1606 may be displayed for less than 100 ms). The mobile device 1602 of the illustrated example includes visual indications 1610, 1612, and 1614. The visual indications 1610, 1612, and 1614 may be any type of visual indications such as light emitting diodes (LEDs), liquid crystal displays (LCDs), or any other type of visual indicator. The visual indications 1610, 1612, and 1614 of the illustrated example are used to provide alert information to users. For example, one or more of the visual indications 1610, 1612, and 1614 may be illuminated before the supplemental information message 1606 is displayed on the display 1604 to alert or prime the user to be aware that the supplemental information message 1606 will be displayed. Where more than one of the visual indications 1610, 1612, and 1614 is present in the mobile device 1602, the visual indications 1610, 1612, and 1614 may have separate meanings. For example, the visual indications 1610, 1612, and 1614 may indicate separate levels of urgency (e.g., low, medium, and high) for the supplemental information message 1606. For example, the visual indications 1610, 1612, and 1614 may display in different colors. The visual indications 1610, 1612, and 1614 may be illuminated in a manner that provides limited or no conscious perception by the user (e.g., may be illuminated for less than 100 ms) or may be displayed in a manner than provides for conscious perception.

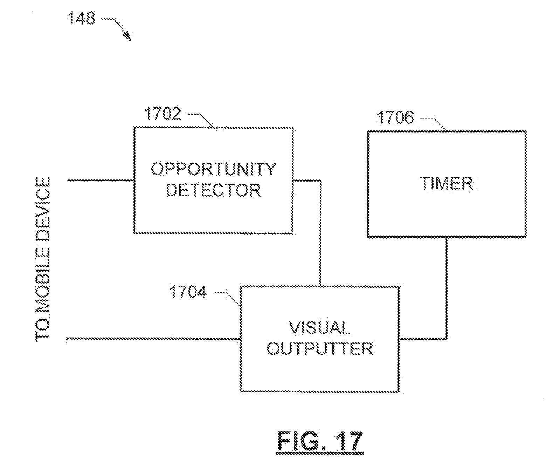

FIG. 17 is a block diagram of an example implementation of the visual supplement module 148 that may implement the process illustrated in FIG. 5. The example visual supplement module 148 includes an opportunity detector 1702, which is coupled to a visual outputter 1704, which is coupled to a timer 1706. The opportunity detector 1702 detects opportunities for presenting visual supplement messages and alerts on the mobile device 100. For example, the opportunity detector 1702 may monitor the operating system on the mobile device 100, applications executing on the mobile device 100, user input at the mobile device 100, etc. When an opportunity for presenting a visual supplement message is detected, the opportunity detector 1702 instructs the visual outputter 1704 to output a visual supplement message.

The visual outputter 1704 generates a message based on the detected opportunity and causes the message to be displayed on the mobile device 100. The visual outputter 1704 also instructs the timer 1706 to start. The timer 1706 tracks the amount of time that a supplemental information message has been displayed. For example, the timer 1706 may be set to 75 ms. When the timer 1706 has expired, the timer 1706 notifies the visual outputter 1704 that the set time has expired. The visual outputter 1704 then removes the supplemental information message from the display of the mobile device 100.

While the foregoing describes an example block diagram implementation of the visual supplement module 148, other implementations are possible. For example, additional blocks may be included and additional or different connections between the blocks may exist.

While the foregoing describes example implementations of presentations of supplemental information messages and implementations of the visual supplement module 148, other implementations and arrangements are possible. For example, some of the supplemental information messages maybe combined, supplemental information messages may be presented in other situations, supplemental information messages may be displayed for longer periods of time (e.g., 100 milliseconds, 150 milliseconds, etc.).

## Claims

1. A method comprising:
detecting an opportunity to provide an alert on the display (110) of a mobile device (100); and
in response to the detection, providing supplemental information on a display (110) of the mobile device (100) for less than 75 milliseconds.

2. A method as defined in claim 1, wherein providing supplemental information on the display (110) further comprises providing a first supplemental information for less than 75 milliseconds and then displaying a second supplemental information for less than 75 milliseconds.

3. A method as defined in claim 2, wherein the first supplemental indication provides an alert that the second supplemental is about to be displayed.

4. A method as defined in any of claims 1 to 3, wherein detecting the opportunity to provide the alert comprises detecting an incoming communication to the mobile device (100).

5. A method as defined in any of claims 1 to 4, wherein the supplemental information is an indication associated with an incoming communication.

6. A method as defined in any of claims 1 to 5, wherein the supplemental information is an indication of the source of the incoming communication.

7. A method as defined in any of claims 1 to 6, wherein detecting the opportunity to provide the alert comprises detecting a delay in receiving an input to the mobile device (100).

8. A method as defined in any of claims 1 to 7, wherein the supplemental information is a hint in a game.

9. A method as defined in any of claims 1 to 8, wherein the supplemental information is an indication of a calendar item.

10. A method as defined in any of claims 1 to 9, wherein the supplemental information is an indication an approaching point of interest in a navigation system.

11. A method as defined in any of claims 1 to 10, wherein the supplemental information is an indication of a next graphical user interface element to be selected.

12. A method as defined in any of claims 1 to 11, wherein the supplemental information is an indication of the application associated with a selected object in a menu.

13. A method as defined in any of claims 1 to 12, wherein the supplemental information is a predicted word for user input.

14. A method as defined in any of claims 1 to 13, wherein a light emitting diode is illuminated prior to providing the supplemental information.

15. A mobile wireless communication device (100) comprising:
a housing (100);
a display carried by the housing (110);
a wireless receiver and transmitter (104) carried by the housing (100);
a processor (102) carried by the housing, coupled to the wireless receiver and transmitter (104), and coupled to the display (110), the processor (102) configured to perform the method of any one of claims 1-14.
